# EUROPÄISCHE PATENTSCHRIFT

(11) **EP 1 608 721 B1**
(45) Veröffentlichungstag und Bekanntmachung des Hinweises auf die Patenterteilung: **20.04.2011**
(21) Anmeldenummer: 04714297.1
(22) Anmeldetag: 25.02.2004
(51) Int. Cl.: C10B 47/12, C10B 53/02

(54) **VERFAHREN UND VORRICHTUNG ZUR PYROLYSE VON BIOMASSE**
METHOD AND DEVICE FOR THE PYROLYSIS OF BIOMASS
PROCEDE ET DISPOSITIF DE PYROLYSE D'UNE BIOMASSE

(30) Priorität: 25.02.2003 DE 10308260; 30.09.2003 DE 10345842
(43) Veröffentlichungstag der Anmeldung: 28.12.2005
(73) Patentinhaber: Pytec Thermochemische Anlagen Gmbh, 21337 Lüneburg (DE)
(72) Erfinder: MEIER, Dietrich, 21033 Hamburg (DE); KLAUBERT, Hannes, 21337 Lüneburg (DE); SCHÖLL, Stefan, 21037 Hamburg (DE)
(74) Vertreter: Wenzel & Kalkoff
(86) Internationale Anmeldenummer: PCT/EP2004/001858
(87) Internationale Veröffentlichungsnummer: WO 2004/076591

(56) Entgegenhaltungen:
- DE-A- 2 436 290
- LEDE JACQUES ET AL: "FAST PYROLYSIS OF WOOD: DIRECT MEASUREMENT AND STUDY OF ABLATION RATE" FUEL, Bd. 64, Nr. 11, November 1985 (1985-11), Seiten 1514-1520, XP002285813
- BRIDGWATER A V ET AL: "Fast pyrolysis processes for biomass" RENEWABLE AND SUSTAINABLE ENERGY REVIEWS, ELSEVIERS SCIENCE, NEW YORK, NY, US, Bd. 4, Nr. 1, März 2000 (2000-03), Seiten 1-73, XP004268416 ISSN: 1364-0321 in der Anmeldung erwähnt
- M. KALTSCHMITT, A.V. BRIDGWATER: "Biomass Gasification and Pyrolysis, State of the Art and Future Prospects" 1997, CPL PRESS , NEWBURY , XP008031787 O. Boutin, P. Kiener, H.Z. Li and J. Lédé: "Temperature of ablative pyrolysis of wood. Comparison of spinning disc and rotating cylinder experiments", Seiten 336-344
- PEACOCKE G V C ET AL: "ABLATIVE PLATE PYROLYSIS OF BIOMASS FOR LIQUIDS" BIOMASS AND BIOENERGY, PERGAMON, OXFORD, GB, Bd. 7, Nr. 1-6, 1994, Seiten 147-154, XP008015226 ISSN: 0961-9534
- J.W. BLACK, D.B. BROWN: "Preliminary Mass Testing of the Continuous Ablation Reactor" BIOMASS THERMAL PROCESSING, PROCEEDINGS OF THE FIRST CANADA/EUROPEAN COMMUNITY R&D CONTRACTORS MEETING, 1990, pages 123-125,
- D.B. BROWN: "Continuous Ablative Regenerator System" BIO-OIL PRODUCTION & UTILISATION, PROCEEDINGS OF THE 2ND EU-CANADA WORKSHOP ON THERMAL BIOMASS PROCESSING, CPL PRESS, pages 96-101,
- N. POPOVIC: "Physical and Chemical Characterization of Char Derived from Scrap Tires by Ultra Fast Pyrolysis, Chapter 1.4" THESIS, February 2000 (2000-02), pages 8-10, Memorial University of Newfoundland

## Beschreibung

Die Erfindung betrifft ein Verfahren zum ablativen Pyrolysieren von Biomasse mit einem Heizelement und mit Mitteln zum Führen der Biomasse sowie eine Anlage hierfür.

Als Pyrolyse wird ein Prozess bezeichnet, bei dem organisches Material unter weitgehendem Ausschluss von Sauerstoff bei Temperaturen bis ca. 600°C in gasförmige, flüssige und feste Abbauprodukte zerlegt wird. Ziel ist die Maximierung der flüssigen Abbauprodukte, die als Pyrolysat mit hohem Energiegehalt vielfältig verwendet werden können. Für die technische Umsetzung eignet sich vor allem die Flash-Pyrolyse. Das zu zerlegende organische Material wird in kürzester Zeit auf Temperaturen von ca. 450°C bis 500°C aufgeheizt und die entstehenden Pyrolyse-Produkte werden überwiegend zu Pyrolysat kondensiert.

Verfahren, die nach dem Prinzip der Flash-Pyrolyse arbeiten, verwenden z. B. Sandbett-Reaktoren, bei denen fein gemahlene Partikel mit heißem Sand vermischt werden und so pyrolytisch abgebaut werden (vgl. WO 97/06886 Biomass Technology). Andere Verfahren verwenden beheizte, rotierende Schreiben, gegen die das organische Material bei Temperaturen von 500°C bis 900°C gedrückt wird (Martin et al., "Ablative melting of a solid cylinder perpendiculary pressed against a heated wall" in Heat Mass Transfer, Vol. 29, No. 9, pp. 1407 -1415,1986). Andere Verfahren setzen dagegen beheizte, stationäre Reaktorplatten ein, auf denen das abzubauende organische Material bewegt wird (Bridgwater u. Peacocke, Fast pyprolysis processes for biomass, in Renewable & Sustainable. Energy Reviews 4, 2000,1-73). Bridgwater und Peacocke beschreiben den aktuellen Stand der Technik für Labor-, Pilot- und Industrieanlagen (soweit diese vorhanden sind) vollständig. Den dort beschriebenen Anlagen ist gemeinsam, dass der Aufbau der Reaktoren und die Aufbereitung der Pyrolyseprodukte verhältnismäßig kompliziert ist. Weiter erfordern die vorgenannten Anlagen das Zerlegen der Biomasse in sehr kleine Feststoffpartikel, damit die Pyrolyse vollständig erfolgt. Das Herstellen derart feiner Partikel ist sehr energieaufwändig und mindert den Wirkungsgrad des Verfahrens. Eine Versuchsanordnung zur ablativen Pyrolyse offenbart J. Lede, Fuel, Vol. 64, November, S. 1514-1520. Es ist Aufgabe der Erfindung, ein einfaches Verfahren und eine einfache Anlage zur Pyrolyse von organischem Material bereitzustellen.

Das erfindungsgemäße Verfahren ist ein Verfahren nach Anspruch 1. Das Verfahren weist ein Heizelement und Mittel zum Führen der Biomasse auf, wobei während der Pyrolyse das Heizelement und die Biomasse mit einem Druck von ca. 5 bar bis zu ca. 200 bar gegeneinander gepresst werden. Die Zuführung der Wärme an das Material muss dabei schneller erfolgen als die Wärme im zu pyrolysierenden Material abgeleitet wird, dann ist das Abschmelzen an der Oberfläche gegeben (ablative Pyrolyse). Das Verfahren arbeitet bei Anwendung dieser verhältnismäßig hohen Anpress-Drücke besonders wirtschaftlich. Nach einer geeigneten Ausführungsform der Erfindung beträgt der Druck zwischen ca. 5 bar und ca. 150 bar, bevorzugt zwischen ca. 10 bar und ca. 100 bar, besonders bevorzugt zwischen ca. 10 bar und ca. 80 bar, vorteilhaft zwischen ca. 20 bar und ca. 60 bar.

Das Heizelement, an dem die abzubauende Biomasse anliegt, ist auf eine Temperatur aufgeheizt, die über der für eine optimale Pyrolyse erforderlichen Temperatur liegt, da die Biomasse durch den Kontakt mit dem Heizelement diesem Wärme entzieht, die dann für eine Pyrolyse nicht mehr zur Verfügung steht. Die Zuführung der Wärmeenergie vom Heizelement an die Kontaktfläche des zu pyrolysierenden Materials muss dabei schneller erfolgen als die Wärme im zu pyrolysierenden Material abgeleitet wird. Die Temperatur lässt sich - auch in Abhängigkeit von dem angewandten Anpressdruck - in einem weiten Bereich einstellen, etwa von ca. 300°C bis ca. 1000°C, vorzugsweise von ca. 400°C bis ca. 800°C, besonders bevorzugt zwischen ca. 500°C und ca. 700°C, vorteilhaft zwischen ca. 550°C und ca. 600°C.

Das Heizelement ist als ebene oder gewölbte Platte ausgeführt, die ggf. aus einzelnen Segmenten zusammengesetzt ist. Das Heizelement kann so auf einfache Weise an die Größe der Anlage angepasst werden. Durch die Ausführung als gewölbte Platte kann bei gleichem Durchmesser die verfügbare Heizfläche vergrößert werden. Die Abführung von Pyrolyseprodukten wird zudem vereinfacht, wenn ein gewölbtes Heizelement eingesetzt wird. Die einfache, ebene Platte ist dagegen eine preiswerte und einfach ausführbare Lösung für das Heizelement.

Die Platte, die als Heizelement eingesetzt wird, ist vorzugsweise kreisförmig. Der Durchmesser der Platte kann in einem weiten Bereich variieren, beispielsweise von ca. Durchmesser der Platte kann in einem weiten Bereich variieren, beispielsweise von ca. 20 cm Durchmesser für Versuchs- oder Pilotanlagen bis zu ca. 300 cm Durchmesser für industrielle Anlagen, die eine Kapazität von ca. 10.000 kg/Stunde aufweisen.

Eine bevorzugte Ausführungsform des Heizelements betrifft eine profilierte Platte, bei der das Profil Raum schafft für die Abführung von Pyrolyseprodukten. Das Profil ermöglicht, insbesondere bei direkter Beheizung des Heizelements, ein Aufheizen der Platte jeweils unmittelbar vor dem Kontakt mit dem organischen Material. Zudem ist diese Ausführung der Platte materialsparend. Ein weiterer Vorteil ist, dass das Profil, insbesondere wenn es als Rillen in der Oberfläche des Heizelements ausgebildet ist, einen verbesserten Abtransport der Pyrolyseprodukte ermöglicht Besonders bevorzugt wird es, wenn das Heizelement mit Rillen ausgebildet ist. Als sehr geeignet haben sich Rillen erwiesen, die radial angeordnet sind.

Das Heizelement kann grundsätzlich aus jedem Material gefertigt sein, das unter den Bedingungen des Verfahrens, insbesondere Druck, Temperatur Wärmeleitfähigkeit und ggf. Aggressivität der pyrolytischen Abbauprodukte beständig ist. Als besonders geeignet haben sich Platten aus Metall und / oder Keramik erwiesen, ggf. auch Kombinationen aus diesen Werkstoffen.

Die an das Heizelement angepresste Biomasse wird durch die zugeführte Wärme an der Oberfläche / Kontaktfläche ganz überwiegend in gasförmige und zu einem kleineren Teil in feste Bestandteile zerlegt. Es wird bevorzugt, wenn die Verweilzeit dieser gasförmigen Pyrolyseprodukte zwischen Entstehung und weiterer Aufbereitung auf einen Zeitraum von ca. 0,5 bis ca. 10 Sekunden, vorzugsweise von weniger als 5 Sekunden, besonders bevorzugt von ca. 2 Sekunden eingestellt ist. Mit Blick auf das Heizelement hat sich zum einen herausgestellt, dass die ablativ abgeschmolzene Biomasse dem Heizelement Wärmeenergie entzogen hat, so dass sich nach diesem Zeitraum eine deutlich verringerte Temperatur des Heizelements eingestellt hat Andererseits genügt dieser Zeitraum, um die Biomasse durch dieses ablative Verfahren in niedermolekulare, überwiegend gasförmige Komponenten zu zerlegen. Die geringe Verweildauer der Pyrolyseprodukte vor der weiteren Aufbereitung ermöglicht die Verarbeitung eines möglichst hohen Anteils primärer Pyrolyseprodukte, da nicht genügend Reaktionszeit zum Aufbau sekundärer Pyrolyseverbindungen gewährt wird.

Es ist bezeichnend für den Stand der Technik bei bekannten Pyrolyseverfahren, dass die zu zersetzende Biomasse vor der Pyrolyse in sehr kleine Feststoffpartikel zerlegt werden muss. Dies erfordert hohen Energieaufwand und auch hohen apparativen Aufwand, so dass die ökonomische Bilanz bekannter Verfahren ungünstig ausfällt Unter den Bedingungen des erfindungsgemäßen Verfahrens, das ablativ pyrolysiert, können dagegen auch verhältnismäßig grobe Feststoff Teile vollständig pyrolysiert werden. Teilchengrößen von 0,5 mm bis 70 cm, vorzugsweise 5 cm bis 50 cm, besonders bevorzugt 15 cm bis 30 cm, können verarbeitet werden. Damit verringert sich der Aufwand für die pyrolysefertige Aufbereitung der Rohstoffe erheblich. Der Wirkungsgrad des im Rahmen der Erfindung vorgeschlagenen Verfahrens ist also besonders groß. Das erfindungsgemäße ablative Verfahren arbeitet wirtschaftlich.

Das Heizelement ist vorzugsweise direkt beheizt, da in diesem Fall die Anlage besonders einfach aufgebaut sein kann. Alternativ kann auch eine indirekte Heizung vorgesehen sein. Vorzugsweise wird das Heizelement direkt durch Gasbrenner beheizt Es wird bevorzugt, wenn hierfür ein aus der Verbrennung von pyrolytisch erzeugter Kohle gewonnenes Rauchgas eingesetzt wird. Die in der Pyrolyse gewonnene Kohle hat einen verhältnismäßig hohen Energiegehalt oder Heizwert, so daß die Menge der Kohle meist ausreicht, um durch Verbrennung die erforderlichen Prozessenergie zu erzeugen. Als geeignet hat sich auch die elektrische Beheizung erwiesen, deren Vorzug die präzise Regelung des Temperaturprofils ist.

Nach einer vorteilhaften Ausführungsform des erfindungsgemäßen Verfahrens werden das Heizelement und die Biomasse während der Pyrolyse relativ zu einander bewegt. Dabei kann sowohl das Heizelement gegenüber der Biomasse als auch die Biomasse gegenüber dem Heizelement bewegt werden. Nach einer bevorzugten Ausführungsform bewegen sich sowohl Heizelement als auch Biomasse während der Pyrolyse gegeneinander. Die relative Bewegung zueinander ermöglicht einen energetisch besonders günstigen Ablauf der ablativen Pyrolyse.

Nach einer bevorzugten Ausführungsform rotiert das Heizelement während der Pyroly-Ausführungsform hat es sich als günstig erwiesen, das Heizelement und die Mittel zum Zuführen der Biomasse bezogen auf die Achse, die durch die Bewegung der Biomasse vorgegeben ist, schräg anzuordnen, vorzugsweise in einem Winkel von mehr als ca. 10°. Die durch die -bezogen auf die Bewegungsrichtung der Biomasse- schräge Anordnung des Heizelements entstehende Anordnung bewirkt eine für die ablative Pyrolyse günstige Druckverteilung und eine gute Abführung der pyrolytischen Abbauprodukte.

Alternativ kann die Biomasse -zusätzlich zum Vorschub bezogen auf das Heizelementeine zweite Bewegung, vorzugsweise eine Rotationsbewegung bezogen auf das feststehende oder rotierende Heizelement ausführen.

Nach einer vorteilhaften Ausführungsform des erfindungsgemäßen Verfahrens sind die Mittel zum Führen der Biomasse zugleich als Mittel zum Fördern der Biomasse ausgelegt. Dabei können die Mittel zum Führen als U-Profile oder als Kastenprofile ausgebildet sein, in denen die Biomasse durch Andruckwalzen, Druckstempel oder durch Kettenförderer, die meist als Obertrum ausgelegt sein werden, an das Heizelement gepresst werden. Alternativ können aber auch Extruder, Schneckenförderer oder Anordnungen von Förderwalzen vorgesehen sein, mit denen die zu pyrolysierende Biomasse an das Heizelement geführt und angedrückt wird.

Die zu pyrolysierende Biomasse wird nicht auf die gesamte erhitzte Fläche des Heizelements aufgebracht. Vielmehr deckt die zu pyrolysierende Biomasse nun einen Teil des Heizelements ab. Das Heizelement und das eine oder die mehreren Mittel zum Führen der Biomasse sind so angeordnet, das die Querschnittsfläche der Mittel zum Führen der Biomasse insgesamt zwischen 2% und 80% der Fläche des Heizelements, vorzugsweise zwischen 2% und 75%, besonders bevorzugt zwischen 5 und 70%, vorteilhaft zwischen 6 und 50% der Fläche des Heizelements während der Pyrolyse abdeckt. Die Wirtschaftlichkeit des Verfahrens und der Anlage setzt voraus, dass mehrere mittel zum Führen sowie ggf. Mittel zum Fördern der Biomasse angeordnet sind, die die Biomasse unter Druck an das Heizelement anpressen. Dadurch wird während der ablativen Pyrolyse ein gleichmäßiges Temperaturprofil sowohl am Heizelement als auch an der Grenzfläche Biomasse und Heizelement aufrecht erhalten.

Zur Durchführung des erfindungsgemäßen Verfahrens sind zweckmäßigerweise Mittel zum Auffangen der Pyrolyseprodukte vorgesehen. Diese Mittel sind vorteilhaft so gestaltet, dass Feststoffe infolge von Gravitation oder mittel Zyklon von den flüssigen oder gasförmigen Pyrolyseprodukten getrennt werden. Diese Mittel zum Auffangen, die vorzugsweise als Gehäuse ausgebildet sind, umschließen den Raum um das Heizelement und die daran angedrückte Biomasse mindestens abschnittweise so, dass sämtliche Abbauprodukte der ablativen Pyrolyse, sowohl gasförmige, flüssige als auch feste Stoffe gesammelt und der weiteren Aufbereitung und Verwertung zugeführt werden. Die Mittel zum Auffangen der Pyroylseprodukte sind vorzugsweise so ausgebildet, dass die Verweildauer der primären Pyrolyseprodukte möglichst kurz gehalten wird, etwa in dem vorstehend beschriebenen, bevorzugten Zeitraum.

Zweckmäßigerweise sind die Mittel zum Auffangen verbunden mit Mitteln zum Aufbereiten, insbesondere zum Fraktionieren und auch zum Kondensieren der Pyrolyseprodukte.

Die Ausbeute an Pyrolyseprodukten beträgt - bezogen auf die Gesamtausbeute- bis zu 70 Gewichts-Prozent (Gew.-%) an flüssigen, überwiegend organischen Komponenten und jeweils ca. 15 Gew.-% an festen und gasförmigen Komponenten bezogen auf die eingesetzte Biomasse. Der Energiegehalt der flüssigen Komponenten liegt üblicherweise zwischen ca. 16 und ca. 18 MJ/kg.

Die Mittel zum Führen der Biomasse sowie ggf. das oder die Heizelemente sind üblicherweise auf einem Träger oder Rahmen installiert. Mit diesem Träger werden die hohen Andruckkräfte aufgefangen, die während der Pyrolyse aufzubringen sind. Es hat sich als besonders vorteilhaft erwiesen, jeweils mindestens zwei Heizelemente und zwei Mittel zum Führen von Biomasse spiegelbildlich anzuordnen, wobei vorzugsweise die Heizelemente mittig und die Mittel zum Führen von Biomasse außen montiert sind. Diese Konstruktion ist gerade aus mechanischen Gründen besonders vorteilhaft, um die hohen Andrücke während der ablativen Pyrolyse aufzufangen.

Bei dieser Ausführungsform genügt weiter vorteilhaft z. B. nur ein Gasbrenner als Mittel zum Erzeugen der direkten oder indirekten Heizenergie. Auch die Mittel zum Auffangen der Pyrolyseprodukte können ökonomisch als einheitliches Gehäuse ausgebildet sein, die die mindestens zwei Heizelemente und -mindestens abschnittsweise- die Mittel zum Führen der Biomasse umfassen. Das Aufarbeiten größerer Mengen von Pyrolyseprodukten z. B. in Kondensier- oder Fraktionieranlagen ist bei größerem Massestrom ebenfalls günstiger.

Eine andere bevorzugte Ausführungsform betrifft die Mittel zum Führen der Biomasse. Es hat sich als besonders wirtschaftlich erwiesen, wenn diese Mittel nach Art einer Revolvertrommel angeordnet sind und -bezogen auf das Heizelement- rotieren. Dabei bringen die Mittel zum Fördern für jedes Mittel zum Führen auf die darin enthaltene Biomasse den zur Pyrolyse erforderlichen Druck auf. Nach einer Umdrehung ist ein erheblicher Teil der Biomasse in Pyrolyseprodukte umgesetzt, jedoch nicht immer die gesamte Biomasse, die in dem jeweiligen Mittel zum Führen enthalten war.

Das Auffüllen der Mittel zum Führen erfolgt nun erfindungsgemäß an einer festgelegten Stelle, an der eine Anordnung zum Nachfüllen der Mittel zum Führen von Biomasse, meist ein Magazin, angeordnet ist. In einer einfachen Ausführungsform ist das Magazin dazu ausgelegt, Biomasse zu komprimieren und die komprimierte Biomasse in die Mittel zum Führen einzubringen. Komprimieren bedeutet hier je nach Art der Biomasse und den Anforderungen der Anlage ein einfaches Verdichten, im wesentlichen ein Entlüften oder ein wesentlich stärkeres Verpressen bis z. B. hin zur Pelletierung, bei der die Biomasse komprimiert ist und mit höherer Dichte als beim Ausgangsmaterial vorliegt. Zwischen diesen Extremen sind alle Zwischenstufen des Verdichtens möglich.

Nach einer weiter verbesserten Ausführung ist die Anordnung zum Nachfüllen mit Mitteln zum Erfassen der freien Kapazität in dem zu füllenden Mittel zum Führen von Biomasse ausgestattet. Weiter ist diese Anordnung zum Nachfüllen dann mit Mitteln zum Bemessen der nachzufüllenden Biomasse ausgerüstet Sind beispielsweise 80 % der ursprünglichen Biomasse durch Pyrolyse verbraucht, so können auch nur 80% wieder nachgefüllt werden. Signalisieren die Mittel zum Erfassen der freien Kapazität dies an die Anordnung zum Nachfüllen, so verdichten diese nur eine entsprechende Menge von Biomasse auf Abmessungen, die den signalisierten 80% entsprechen und führen diese den Mitteln zum Führen der Biomasse zu. Alternativ ist die Biomasse bereits komprimiert und es wird nur ein solches Volumen abgetrennt, das die Mittel zum Führen der Biomasse aufnehmen können.

Im Folgenden werden - auch zur besseren Darstellung des vorstehend erläuterten Verfahrens - Ausführungsformen der erfindungsgemäßen Anlagen zur Pyrolyse beschrieben, mit denen das erfindungsgemäße Verfahren umgesetzt wird.

Die Vorrichtung zum Pyrolysieren von Biomasse ist mit einer Materialzuführung und einer Pyrolysierstation ausgestattet, wobei die Materialzuführung Mittel zum Erzeugen von Druck zwischen 5 bar und 200 bar aufweist, die den ablativ zu pyrolysierenden Rohstoff an die Pyrolysierstation anpressen, und wobei die Pyrolysierstation ein Heizelement aufweist, das im Betriebszustand auf eine Temperatur zwischen 300°C und 1000°C aufgeheizt ist.

Die erfindungsgemäße Anlage weist ein Heizelement aus einem hitzebeständigen Werkstoff, vorzugsweise Metall, Keramik oder einem Werkstoff mit metallischen und keramischen Bestandteilen auf, dass mit einem Antrieb versehen ist. Der Antrieb bewirkt, dass das Heizelement im Betriebszustand rotiert. Das Heizelement hat eine Arbeitsfläche, an die im Betriebszustand die zu pyrolysierende Biomasse angepresst wird. Auf der entgegengesetzten Seite des Heizelements, der Heizfläche, sind Mittel zum direkten oder indirekten Erwärmen angeordnet. Vorzugsweise sind offene Kohlebrenner angeordnet, deren Verbrennungsgas aus pyrolytisch erzeugter Kohle gewonnen ist. Diese Form der direkten Heizung bietet einen hohen Wirkungsgrad und ist zudem wirtschaftlich, weil auf diese Weise der Energiegehalt der Kohle ohne aufwändige Aufbereitung oder langen Transport unverzüglich gut genutzt wird.

Das Heizelement ist aus dem o.g. hitzebeständigen Werkstoff. Es ist als Platte ausgebildet, die eben oder gewölbt ist, und die ggf. aus Segmenten zusammengesetzt sein kann. Sie ist vorzugsweise als runde, kreisförmige Platte ausgestaltet und weist bevorzugt ein Profil auf. Ggf. ist das profilierte Heizelement auf der Arbeitsfläche mit Rillen versehen. Die Rillen eignen sich zum Abführen der ablativ erzeugten Pyrolyseprodukte dann besonders gut, wenn sie radial angeordnet sind.

Der Arbeitsfläche gegenüber sind die Mittel zum Zuführen der Biomasse zum Heizelement angeordnet. Die Mittel sind, wie vorstehend erläutert, vielfältig gestaltet, je nach den Anforderungen der einzelnen Anlage. Bevorzugt wird ein U-Profil verwendet, über dessen offener Oberseite ein Magazin, z. B. ein Schacht, angeordnet ist, um Biomasse an das Heizelement heranzuführen. Das U-Profil ragt mit einem ersten, offenen stirnseitigen Ende bis unmittelbar vor die Arbeitsfläche des Heizelements. Mit dem zweiten offenen stirnseitigen Ende steht vorzugsweise ein hydraulischer/pneumatischer Druckstempel als Mittel zum Fördern der Biomasse in Eingriff. Der Druckstempel wird ebenfalls in dem U-Profil geführt und drückt so die darin befindliche Biomasse an die Arbeitsfläche des Heizelements. Ist die im Schacht enthaltene Biomasse pyrolysiert, so wird der Druckstempel zurückgefahren und es wird aus dem Magazin, das dem Schacht zugeordnet ist, neue Biomasse nachgeführt, die dann vom Druckstempel komprimiert und an das Heizelement angepresst wird.

Mehrere dieser U-Profile, in der Regel zwischen vier und zwanzig, sind nach einer bevorzugten Ausführungsform der Erfindung mit den entsprechenden Magazinen und Hydraulikstempeln vor der Arbeitsfläche angeordnet. Sie decken ca. 2% bis ca. 80% der gesamten Arbeitsfläche ab, vorzugsweise ca. 2% bis ca. 75%, vorteilhaft ca. 5 bis ca. 70%, besonders vorteilhaft ca. 6 bis 50% der gesamten Arbeitsfläche. Dadurch, dass die Arbeitsfläche nur abschnittsweise an der zu pyrolysierenden bzw. pyrolysierten Biomasse anliegt und dann wieder frei und unbelastet rotiert, ist ein besonders gleichmäßiger Ablauf der Pyrolyse gewährleistet. Die Arbeitsfläche wird zwischen den einzelnen Abschnitten, an denen sie an die Biomasse angedrückt und durch die Abgabe von Wärme an die Biomasse abgekühlt wird, wieder auf die erforderliche Temperatur aufgeheizt und kann die Biomasse dadurch gleichmäßig und vollständig abbauen. Die durch den ablativen pyrolytischen Abbau der Biomasse freigesetzten gasförmigen und festen Komponenten werden aufgefangen und weiter verwertet.

Alternativ kann die erfindungsgemäße Vorrichtung so ausgebildet sein, dass Mittel zum Bewegen der Mittel zum Führen vorgesehen sind, die während der Pyrolyse die Mittel zum Führen in Rotation versetzen und an dem feststehenden Heizelement vorbeiführen.

Die Mittel zum Erzeugen von Druck sind vorzugsweise als Hydraulikstempel ausgebildet. Sie bringen einen Druck von bis zu 200 bar auf die Biomasse und über diese auf das Heizelement auf. Diese Anlagenteile sind deshalb entsprechend fest verankert, so dass der erforderliche Betriebsdruck exakt eingestellt und beibehalten werden kann. Alternativ können die Mittel zum Erzeugen von Druck auch als Schneckenförderer, als Extruder oder nach Art eines Walzenförderers ausgebildet sein. Dann übernehmen die Mittel zum Aufbauen von Druck gleichzeitig die Funktion der Mittel zum Führen von Biomasse.

Um den Bereich, in dem die Biomasse pyrolytisch ablativ abgebaut wird, ist als Mittel zum Auffangen der Pyrolyseprodukte ein Gehäuse angeordnet, in dem eine erste untere Öffnung im Boden bzw. am unteren Ende des Gehäuses angeordnet ist. Diese Öffnung dient zum Auffangen und Abführen fester Pyrolyseprodukte, die durch die Schwerkraft nach unten sinken. Mindestens eine zweite Öffnung am oberen Ende des Gehäuses ist mit einem Kondensator verbunden, der im Betriebszustand gekühlt ist. Da neben den Feststoffen durch die Pyrolyse zunächst ausschließlich flüchtige Abbauprodukte entstehen, steigen diese Pyrolyseprodukte nach oben, werden dort aufgefangen und nach möglichst kurzer Verweildauer im Gehäuse an dem Kondensator bis zur flüssigen Phase abgekühlt und ggf. gleichzeitig fraktioniert. Die flüssigen Pyrolysate sind zwar überwiegend organisch, enthalten aber bis zu ca. 35 % Wasser und sind dementsprechend aus einer teerartigen Fraktion und wasserlöslichen Bestandteilen zusammengesetzt. Übliche Komponenten zur Fraktionierung und Reinigung der Pyrolysate umfassen auch Abscheide- und Filtervorrichtungen wie z. B. Zyklone oder elektrostatische Filter, in denen etwa noch vorhandenen Fest- oder Schwebstoffe abgeschieden werden.

Als Rohstoff für die Pyrolyse können natürliche oder synthetische Oligomere, natürliche oder synthetische Polymere, lignocellulosische Rohstoffe, Gummi, Kunststoff und Gemische dieser Stoffe, Gülle, Schlamm, insbesondere Klärschlämme, organische Reststoffe wie Knochen, Felle, Federn, aber auch schwer zu entsorgende Stoffe wie beschichtete, lackierte oder lasierte oder in anderer Weise oberflächenbehandelte Holzwerkstoffe, schließlich auch Industrierestholz und Bauholz verwendet werden.

Die erfindungsgemäße Vorrichtung zur Pyrolyse von Biomasse weist -wie vorstehend ausgeführt- zum einen eine Materialzuführung und zum anderen eine Pyrolysestation auf. Die Materialzuführung ist ausgestattet mit der eigentlichen Führung für die zu pyrolysierende Biomasse und mit Mitteln zum Aufbringen des Anpressdrucks von ca. 5 bis ca. 200 bar an die Pyrolysierstation. Die Mittel zum Aufbringen des Anpressdrucks sind in der Regel gleichzeitig die Mittel zum Fördern der Biomasse zur Pyrolysierstation. Die Führung der Biomasse ist üblicherweise mit einem Magazin zum Nachführen von Biomasse versehen, um einen kontinuierlichen Betrieb der Vorrichtung zu gewährleisten. Das Magazin kann von Hand oder automatisch beschickt werden.

Die Pyrolysierstation weist eine Welle auf, an der das Heizelement, in der Regel eine Platte aus Metall und/oder Keramik, befestigt ist Die Welle wird durch einen Antrieb und ein Getriebe in Rotation versetzt. Weiter weist die Pyrolysierstation eine Heizvorrichtung auf, mit der das Heizelement im Betriebszustand auf eine Temperatur zwischen 300°C und 1000°C aufgeheizt wird.

Bevorzugt wird eine direkte Heizung, alternativ kann aber auch eine indirekte Heizung vorgesehen sein. Die direkte Heizung wird besonders energie- und kostengünstig mit festen Pyrolyseprodukten betrieben, die im Prozess erzeugt werden.

Ausführungsbeispiele der Erfindung werden nachstehend an Hand der Fig. näher erläutert. Es zeigen:
- Fig. 1: eine schematische Darstellung einer Vorrichtung zur Pyrolyse;
- Fig. 2: ein scheibenförmiges, rotierendes Heizelement;
- Fig. 3: eine schematische Darstellung wesentlicher Bauteile einer Vorrichtung zur Py- roylse mit zwei Heizelementen

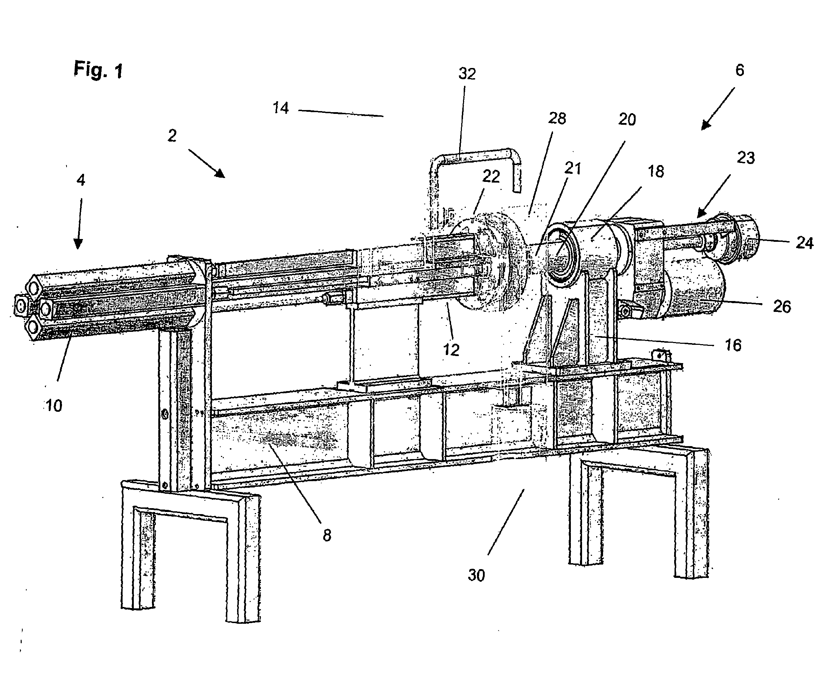

Fig. 1 zeigt eine Vorrichtung 2 zur Pyrolyse, bei der die Materialzuführung 4 und die Pyrolysierstation 6 auf einem gemeinsamen Träger 8 angeordnet sind. Die Materialzuführung 4 weist eine Komponente 10 zum Erzeugen des erforderlichen Anpressdrucks auf die Pyrolysierstation 6 auf. Hier erzeugt die Komponente 10 den Druck mittels Hydraulik (Hydraulik-Komponente 10). Weiter weist die Materialzuführung 4 Führungen 12 für den zu pyrolysierenden Rohstoff auf. Vier parallel angeordnete Führungen 12 sind vorgesehen, die jeweils durch eine eigene, zugeordnete Hydraulik-Komponente 10 über (hier nicht näher dargestellte) Hydraulikstempel mit dem erforderlichen Anpressdruck zwischen ca. 5 bar und ca. 200 bar beaufschlagt werden. Gleichzeitig bewirkt die Hydraulik-Komponente das Heranführen des Rohstoffs an die Pyrolysierstation 6.

Der Rohstoff wird über Zuführ-Magazine 14 in die Führungen 12 gefördert. Jeweils ein Magazin 14 ist einer Führung 12 zugeordnet. Die Magazine 14 können jeweils von Hand oder automatisch gefüllt werden. Grundsätzlich kann die Materialzuführung 4 rotierend ausgebildet sein. Dadurch wird bewirkt, dass der Rohstoff während der Pyrolyse auf einer erhitzten Platte der Pyrolysierstation 6 rotiert. Bei der in Fig. 1 dargestellten Ausführungsform ist die Materialzuführung 4 jedoch stationär ausgebildet

Die Pyrolysierstation 6 weist eine Aufnahme 16 auf, die auf dem gemeinsamen Träger 8 abgestützt ist. Die Aufnahme 16 trägt ein Getriebe 18, das von einer Welle 20 durchsetzt ist. Die Welle 20 trägt an dem der Materialzuführung zugewandten Ende 21 eine im Betriebszustand beheizte Platte 22, die durch das Getriebe 18 in Rotation versetzt wird. Am anderen Ende 23 der Welle 20 ist ein Antrieb 26, hier ein elektrischer Antrieb, angeordnet, der das Getriebe 18 und damit die Platte 22 im Betriebszustand in Rotation versetzt. Weiter ist im Bereich des ersten Endes 21 der Welle 20 eine Heizvorrichtung 24 vorgesehen, die die Platte 22 auf die vorgegebene Betriebstemperatur einstellt. Die Heizvorrichtung 24 ist bevorzugt unmittelbar an der Aufnahme 16 angeordnet. Hier ist die Heizvorrichtung 24 als Gasheizung ausgelegt, die die Platte 22 im Betriebszustand direkt beheizt

Dort, wo die Führungen 12 den zu pyrolysierenden Rohstoff auf die erhitzte, rotierende Platte 22 pressen, umschließt ein Gehäuse 28 zum Auffangen der Pyrolyseprodukte das Ende der Führungen 12 und die Platte 22. Das Gehäuse 28 ist so ausgelegt, dass feste Pyrolyseprodukte durch Schwerkraft nach unten abgeschieden und in einem Sammelbehälter 30 aufgefangen werden. Der weitaus größere Anteil der Pyrolyseprodukte, der im Gehäuse 28 aufgefangen ist, ist gasförmig und wird über eine Sammelleitung 32 einer (hier nicht näher dargestellten, an sich bekannten) Kondensier- und ggf. Fraktioniervorrichtung zugeführt Falls erforderlich, ist beim Auffangen der Pyrolyseprodukte ein Zyklon oder eine vergleichbare Sortier- bzw. Abscheidevorrichtung vorgesehen.

Die Pyrolysierstation 2 ist aus hitzebeständigem Material ausgeführt, hier aus Metall. Die Platte 22 ist aus einem hitzebeständigen, abriebfesten keramischen Material hergestellt.

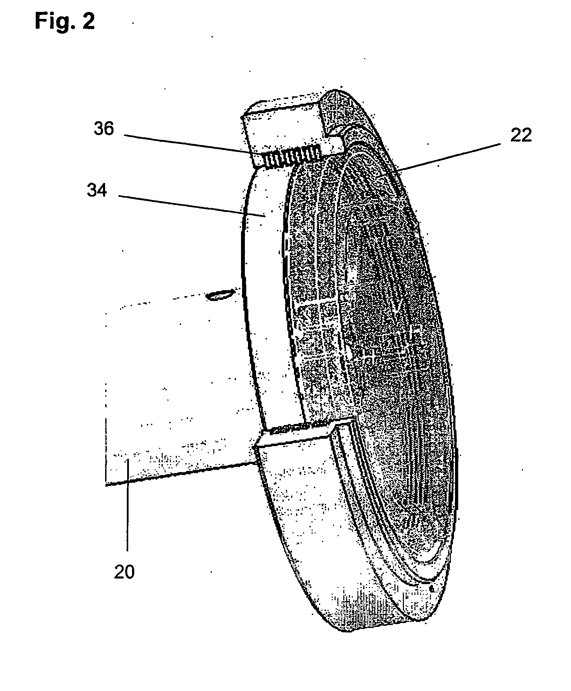

Fig. 2 zeigt ein Heizelement bzw. die Platte 22, also ein Detail der **Pyrolysierstation** 2, die von dem (hier nicht dargestellten) Gehäuse 28 umschlossen ist. Die Platte 22 ist auf der Welle 20 an einem Flansch 34, dessen Durchmesser etwa der Platte 22 entspricht, drehfest fixiert. Flansch 34 und **Welle 20** sind durch Dichtungen 36 gegeneinander abgedichtet. Dadurch wird gewährleistet, dass die Pyrolyseprodukte nicht über die Befestigung der Platte 22 entweichen und ggf. Antrieb oder Heizung der Pyrolysestation 2 beeinträchtigen. Die Platte 22 wird durch das Rohr 20 direkt auf eine Pyrolysetemperatur von 750°C aufgeheizt.

Die Pyrolysestation 2 wird in der Weise betrieben, dass der zu pyrolysierende Rohstoff, z. B. Altmöbel, Holzreste, Holzwerkstoffreste und dergleichen in stückiger Form in Abmessungen zwischen 5 und 70 cm oder kleiner, üblicherweise als vorgebrochenes, oder pelletiertes Material in die Magazine 14 eingebracht werden. Es kann aber auch ohne weiteres Biomasse in Form von Schlämmen, Gülle, oder Kunststoff und dergleichen verarbeitet werden. Die Magazine 14 und Führungen 12 sind dann ggf. an die Form des Rohstoffs anzupassen, z. B. indem Schneckenförderer oder andere Führungen verwendet werden. Über die Magazine 14 gelangt der Rohstoff in die Führungen 12. Dort wird mittels der Hydraulik-Komponente 10 ein Druck von 200 bar auf den Rohstoff in den Führungen 12 aufgebracht. Der Rohstoff wird komprimiert und mit einem Druck von 200 bar gegen die Platte 22 gepresst.

Die Platte 22 ist auf eine Temperatur von 750°C aufgeheizt. Bei dieser Temperatur wird der zu pyrolysierende Rohstoff an der Platte 22 unter Sauerstoffabschluss ablativ, also nur an der Oberfläche, jeweils im Grenzbereich zwischen Rohstoff und Platte 22 in feste, flüssige und gasförmige Bestandteile zerlegt. Da die Platte 22, bezogen auf die Führungen 12, rotiert, werden die Pyrolysebestandteile auf der Platte freigesetzt. Die festen Bestandteile gelangen durch die Schwerkraft nach unten und werden durch das Gehäuse 28 dem Sammelbehälter 30 zugeführt. Die flüssigen Bestandteile gehen in den gasförmigen Zustand über und werden zusammen mit den bereits freigesetzten Pyrolysegasen am oberen Ende des Gehäuses 28 aufgefangen und über die Sammelleitung 32 Kondensier- und ggf. Fraktioniervorrichtungen zugeführt

Die Platte 22 wird im Betriebszustand durch den Motor 26 und das Getriebe 18 in Rotation versetzt und durch die Heizung 24 auf 750°C erhitzt. An der erhitzten Fläche der Platte 22 liegen die vier Führungen 12 mit dem zu pyrolysierenden Rohstoff an. Bei der Pyrolyse des Rohstoffs wird Wärmeenergie verbraucht, die Platte 22 kühlt ab. Dadurch, dass vier Führungen 12 auf der Platte 22 auftreffen, sind Zwischenräume gegeben, in denen ein Abschnitt auf der Platte 22, der soeben an einer der vier Führungen 12 vorbei rotiert ist und dabei durch den Pyrolysevorgang Wärme verloren hat, erneut auf 750°C beheizt wird. Es wird durch die erfindungsgemäße Anlage also ein möglichst gleichmäßiges Temperaturprofil aufrecht erhalten, was eine besonders gleichmäßige Pyrolyse mit einer besonders homogenen und vollständigen Zusammensetzung der Pyrolysate ermöglicht. Ein sehr günstiges Verhältnis von Anpressfläche des Rohstoffs zur Arbeitsfläche der Platte 22 liegt bei 35 bis 65% der beheizten Fläche der Platte 22.

Ist die in einer Führung 12 an die Platte 22 herangeführte Biomasse verbraucht, wird der Druck auf dem jeweiligen Druckstempel in der Führung 12 abgebaut, der Druckstempel wird von der Platte 22 weg in seine Ausgangsposition zurück bewegt. Aus dem Magazin 14 wird neue Biomasse in die Führung 12 nachgefüllt und durch den Druckstempel, auf den nun wieder der Betriebsdruck aufgebracht wird, komprimiert Die Biomasse wird an die Platte 22 angepresst und die Pyrolyse beginnt

Die Heizvorrichtung 24 ist vorzugsweise als Gasbrenner ausgelegt, der mit den festen Pyrolyseprodukten betrieben wird, die im Sammelbehälter 30 aufgefangen werden. Diese direkte Beheizung der Platte 22, die keinen aufwändigen Transport von Heizmaterial erfordert, hat sich in der Energiebilanz als besonders günstig erwiesen.

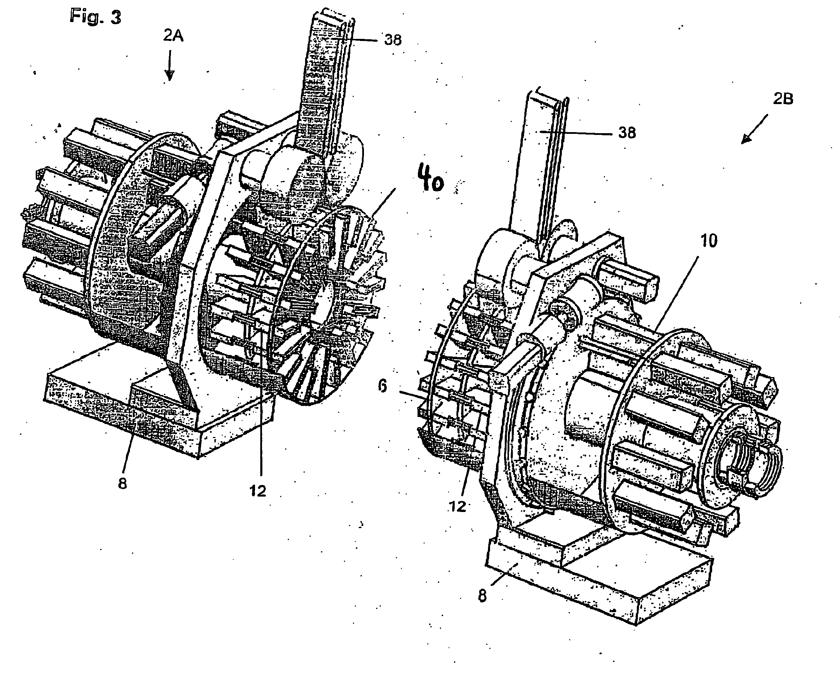

Fig. 3 zeigt wesentliche Bauteile einer alternativen Ausführungsform der erfindungsgemäßen Vorrichtung 2. Zur Beschreibung dieser Ausführungsform werden -soweit möglich- die gleichen Bezugszeichen verwendet wie in den Fig. 1 und 2. Bei dieser Ausführung sind auf den Trägern 8, die hier zweiteilig dargestellt sind, zwei Pyrolysierstationen 6 spiegelbildlich zueinander angeordnet. Die zentral zwischen den Pyrolysierstationen 6 anzuordnende zweiseitige Heizscheibe ist hier nicht dargestellt. Die Führungen 12 mit ihren Mundstücken 40, die den Heizelementen zugewandt sind, sind mittig zueinander auf den Trägern 8 angeordnet. Es wird bevorzugt, wenn die Träger 8 auf einem gemeinsamen Untergestell (Hier nicht dargestellt) fixiert sind. Jeweils außen sind Führungen 12 für die zu pyrolysierende Biomasse angeordnet. Die Führungen 12 sind revolvierend ausgebildet, sie rotieren mit ca. 3 Umdrehungen je Minute während der Pyrolyse ebenso die Heizscheiben, die mit ca. 100 Umdrehungen je Minute umlaufen.

Auf der Oberseite der Vorrichtung 2 ist über den Führungen 12 ein stationäres Magazin 38 angeordnet. Dem Magazin 38 wird Biomasse zugeführt, die im Magazin komprimiert und in eine Form gebracht wird, die mit dem Querschnitt **der Führung 12** korrespondiert. Das Magazin 38 ist mit Mitteln zum Bemessen der komprimierten Biomasse versehen. Die abgemessene, komprimierte Biomasse wird vom Magazin 38 in die jeweils unter oder neben dem Magazin 38 befindliche Führung 12 gefördert. Auf diese Weise genügt ein Magazin 38, um sämtliche Führungen 12 mit Biomasse zu versorgen.

Das in Fig. 3 gezeigte Magazin 38 ist zudem mit Mitteln zum Erfassen der freien Kapazität der jeweils zu füllenden Führung 12 ausgestattet. Am einfachsten sind diese Mittel als optische Erfassungsmittel ausgebildet. Alternativ kann die Stellung des Druckzylinders 10 erfasst werden, dessen Stellung anzeigt, ob Biomasse in der zu füllenden Führung 12 verblieben ist. Je nach Signal der Mittel zum Erfassen komprimiert das Magazin 38 nun eine korrespondierende Menge an Biomasse, deren Abmessungen nun den verfügbaren und zum Nachfüllen anstehenden Raum in der Führung 12 entsprechen. Durch diese Maßnahme ist gewährleistet, dass jede Führung 12 nach Passieren des Magazins 38 vollständig gefüllt ist, unabhängig davon, ob vor Erreichen des Magazins sämtliche Biomasse pyrolysiert wurde. Gleichzeitig gewährleistet diese Anordnung auch, dass Führungen 12 unterschiedlicher Größe aus nur einem Magazin 38 beschickt werden können. Typische Größenordnungen für die zu befüllenden Magazine sind beispielsweise eine maximale Breite von ca. 2 cm, eine Höhe von ca. 28 cm und eine Tiefe von ca. 15 bis ca. 30 cm. Werden beispielsweise Holzhackschnitzel oder Holzfasern verarbeitet, so ist dem Magazin 38 ein hier nicht dargestellter Feeder vorgeschaltet, der von einer Schachtbreite von ca. 4 cm ausgehend die Biomasse kontinuierlich auf ca. 2 cm Dicke komprimiert, wobei die Länge der komprimierten Biomasse dem Füllgrad der geleerten Schächte angepasst wird. Wenn die Führung 12 nicht vollständig geleert wurde, wird kürzere komprimierte Biomasse zugeführt

Aufgrund der Anordnung der Führungen 12 und der Mundstücke 40 sind die Kräfteverhältnisse bei der in Fig. 3 gezeigten Anordnung während der Pyrolyse besonders günstig aufgeteilt, da zwei Vorrichtungs-Hälften 2A und 2B gegeneinander arbeiten.

Die Heizelemente (hier nicht dargestellt) und die Mundstücke 40 sind in einem gemeinsamen Gehäuse (hier nicht dargestellt) angeordnet und werden wahlweise von einem gemeinsamen Gasbrenner oder von zwei getrennten Brennern beheizt. Die Pyrolyseprodukte, die an den Mundstücke 40 entstehen, werden gemeinsam aufgearbeitet Auch dies begünstigt ein wirtschaftliches Arbeiten.

## Patentansprüche

1. Verfahren zur ablativen Pyrolyse von Biomasse, synthetischen Oligomeren, synthetischen Polymeren, Gummi und/oder Kunststoff, mit einem Heizelement (22) und mit mehreren Mitteln (12) zum Führen der Biomasse, wobei während der Pyrolyse das Heizelement (22) und die Biomasse mit einem Druck von 5 bar bis zu 200 bar gegeneinander gepreßt werden und wobei die Querschnittsfläche der Mittel (12) zum Führen insgesamt zwischen 2% und 80% der Fläche des Heizelements (22) abdeckt.

2. Verfahren nach Anspruch 1, **dadurch gekennzeichnet, daß** der Druck zwischen 5 bar und 150 bar, vorzugsweise zwischen 10 bar und 100 bar, besonders bevorzugt zwischen 10 bar und 80 bar, vorzugsweise zwischen 20 bar und 60 bar beträgt.

3. Verfahren nach Anspruch 1, **dadurch gekennzeichnet, daß** das Heizelement (22) im Betriebszustand auf Temperaturen zwischen 300°C und 1000°C, vorzugsweise zwischen 400°C und 800°C, besonders bevorzugt zwischen 500°C und 700°C, vorteilhaft zwischen 550°C und 600°C aufgeheizt ist.

4. Verfahren nach Anspruch 1, **dadurch gekennzeichnet, daß** das Heizelement (22) eine ebene oder gewölbte Platte ist, die ggf. aus einzelnen Segmenten zusammengesetzt ist.

5. Verfahren nach Anspruch 1, **dadurch gekennzeichnet, daß** das Heizelement (22) als profilierte Platte, vorzugsweise als Platte mit Rillen, ausgebildet ist.

6. Verfahren nach Anspruch 1, **dadurch gekennzeichnet, dass** als Heizelement (22) eine kreisförmige Platte, vorzugsweise mit einem Durchmesser von ca. 20 bis ca. 300 cm verwendet wird.

7. Verfahren nach Anspruch 1, **dadurch gekennzeichnet, daß** das Heizelement (22) aus Metall und/oder Keramik hergestellt ist.

8. Verfahren nach Anspruch 1, **dadurch gekennzeichnet, dass** die Verweildauer primärer Pyrolyseprodukte bis zur weiteren Aufbereitung auf einen Zeitraum von ca. 0,5 bis ca. 10 Sekunden, vorzugsweise von weniger als 5 Sekunden, besonders bevorzugt von weniger als 2 Sekunden eingestellt ist.

9. Verfahren nach Anspruch 1, **dadurch gekennzeichnet, dass** die Biomasse vor der Pyrolyse auf eine Teilchengröße von ca. 0,5 mm bis ca. 70 cm, vorzugsweise von ca. 5 cm bis ca. 50 cm, besonders bevorzugt von ca. 15 cm bis ca. 30 cm zerlegt wird.

10. Verfahren nach Anspruch 1, **dadurch gekennzeichnet, daß** das Heizelement (22) mit einer Vorrichtung zur direkten Beheizung oder mit einer Vorrichtung zur indirekten Beheizung ausgestattet ist.

11. Verfahren nach Anspruch 1, **dadurch gekennzeichnet, daß** die Biomasse - zusätzlich zum Vorschub gegen das Heizelement (22) - eine zweite Bewegung, vorzugsweise eine Rotationsbewegung bezogen auf das feststehende Heizelement (22) ausführt.

12. Verfahren nach Anspruch 1, **dadurch gekennzeichnet, daß** während der Pyrolyse die Biomasse und das Heizelement (22) relativ zueinander bewegt werden, wobei das Heizelement (22) und die Mittel (12) zum Zuführen zueinander in einem Winkel von mehr als 10° angeordnet sind, bezogen auf die Achse, die durch die Vorschubrichtung der Biomasse gegen das Heizelement (22) definiert wird.

13. Verfahren nach Anspruch 1, **dadurch gekennzeichnet, daß** das Heizelement (22) während der Pyrolyse rotiert.

14. Verfahren nach Anspruch 1, **dadurch gekennzeichnet, daß** die Biomasse während der Pyrolyse relativ zum Heizelement (22) bewegt wird.

15. Verfahren nach Anspruch 1, **dadurch gekennzeichnet, daß** die Mittel (12) zum Führen der Biomasse als U-Profile oder als Kastenprofil ausgebildet sind, in denen die Biomasse mit Mitteln (10) zum Fördern geführt wird.

16. Verfahren nach Anspruch 1, **dadurch gekennzeichnet, daß** die Mittel (12) zum Führen als Extruder oder Schneckenförderer oder nach Art eines Walzenvorschubs ausgebildet sind.

17. Verfahren nach Anspruch 1, **dadurch gekennzeichnet, daß** mehrere Mittel (12) zum Führen der Biomasse auf ein Heizelement hin angeordnet sind.

18. Verfahren nach Anspruch 1, **dadurch gekennzeichnet, daß** die Mittel (12) zum Fördern als Druckstempel, Kettenförderer (Obertrum) oder als Anpreßwalzen ausgebildet sind.

19. Verfahren nach Anspruch 1, mit einem Heizelement (22) und einem oder mehreren Mitteln (12) zum Führen der Biomasse, wobei die Querschnittsfläche der Mittel (12) zum Führen der Biomasse insgesamt zwischen 2% und 75%, besonders bevorzugt zwischen 5 und 70%, vorteilhaft zwischen 6 und 50% der Fläche des Heizelements (22) während der Pyrolyse abdecken.

20. Verfahren nach Anspruch 1, **dadurch gekennzeichnet, dass** Mittel (28) zum Auffangen der Pyrolyseprodukte vorgesehen sind.

21. Verfahren nach Anspruch 1, **dadurch gekennzeichnet, dass** als Mittel zum Auffangen ein Gehäuse (28) vorgesehen ist, das das Heizelement (22) und die Mittel (12) zum Führen der Biomasse dort, wo diese während der Pyrolyse aneinander anliegen, so umfasst, dass die Pyrolyseprodukte, insbesondere Feststoffe und Gase, vollständig aufgefangen werden.

22. Verfahren nach Anspruch 1, **dadurch gekennzeichnet, dass** die Mittel (28) zum Auffangen der Pyrolyseprodukte so ausgelegt sind, dass Feststoffe infolge von Gravitation oder mittels Zyklonen von den flüssigen oder gasförmigen Pyrolyseprodukten getrennt werden.

23. Verfahren nach Anspruch 1, **dadurch gekennzeichnet, dass** die Mittel (28) zum Auffangen der Pyrolyseprodukte Vorrichtungen zum Fraktionieren der gasförmigen Pyrolyseprodukte aufweisen.

24. Verfahren nach Anspruch 1, **dadurch gekennzeichnet, dass** die Energie zum Beheizen des Heizelements (22) aus der Verbrennung von Pyrolyseprodukten, vorzugsweise Kohle, erzeugt wird.

25. Verfahren nach Anspruch 1, **dadurch gekennzeichnet, dass** als Biomasse natürliche Oligomere, natürliche Polymere, lignocellulose Rohstoffe und Gemische dieser Stoffe, Gülle, Schlamm, insbesondere Klärschlämme, organische Reststoffe wie Knochen, Felle, Federn, Industrierestholz und Bauholz eingesetzt wird.

26. Verfahren nach Anspruch 1, wobei die Zuführung der Warme dabei schneller erfolgt, als die Wärme im zu pyrolysierenden Material abgeleitet wird.

27. Vorrichtung zum Pyrolysieren von Biomasse, synthetischen Oligomeren, synthetischen Polymeren, Gummi und/oder Kunststoff, mit einer Materialzuführung (4) und einer Pyrolysierstation (6), wobei die Materialzuführung (4) Mittel zum Erzeugen von Druck zwischen 5 bar und 200 bar aufweist, die den zu pyrolysierenden Rohstoff an die Pyrolysierstation (6) anpressen und wobei die Pyrolysierstation (6) ein Heizelement (22) aufweist, das im Betriebszustand auf eine Temperatur zwischen 300°C und 1000°C aufgeheizt ist, wobei die Querschnittfläche der mehreren Mittel (12) zum Führen der Biomasse insgesamt zwischen 2% und 80% der Fläche des Heizelements (22) abdeckt.

28. Vorrichtung nach Anspruch 27, **dadurch gekennzeichnet, dass** ein Getriebe (18) vorgesehen ist, das das Heizelement (22) im Betriebszustand in Rotation versetzt.

29. Vorrichtung nach Anspruch 27, **dadurch gekennzeichnet, dass** eine Heizvorrichtung (24) für das Heizelement (22) vorgesehen ist, die entweder zum direkten oder zum indirekten Beheizen ausgelegt ist.

30. Vorrichtung nach Anspruch 27, **dadurch gekennzeichnet, dass** das Heizelement (22) aus Metall und / oder Keramik hergestellt ist.

31. Vorrichtung nach Anspruch 27, **dadurch gekennzeichnet, daß** das Heizelement (22) eine ebene oder gewölbte Platte ist, die ggf. aus einzelnen Segmenten zusammengesetzt ist.

32. Vorrichtung nach Anspruch 27, **dadurch gekennzeichnet, daß** das Heizelement (22) als profilierte Platte, vorzugsweise als Platte mit Rillen, ausgebildet ist.

33. Vorrichtung nach Anspruch 27, **dadurch gekennzeichnet, dass** das Heizelement (22) mit einem radial ausgerichteten Profil ausgestattet ist.

34. Vorrichtung nach Anspruch 27, **dadurch gekennzeichnet, daß** das Heizelement (22) und die Mittel (12) zum Zuführen zueinander in einem Winkel von mehr als 10° angeordnet sind, bezogen auf die Achse, die durch die Vorschubrichtung der Biomasse gegen das Heizelement (22) definiert wird.

35. Vorrichtung nach Anspruch 27, **dadurch gekennzeichnet, daß** Mittel zum Bewegen vorgesehen sind, durch die Mittel (12) zum Führen während der Pyrolyse relativ zum Heizelement (22) bewegt werden.

36. Vorrichtung nach Anspruch 27, **dadurch gekennzeichnet, daß** die Mittel (12) zum Führen der Biomasse als U-Profile oder als Kastenprofil ausgebildet sind, in denen die Biomasse mit Mitteln (10) zum Fördern geführt wird.

37. Vorrichtung nach Anspruch 27, **dadurch gekennzeichnet, daß** die Mittel (12) zum Führen als Extruder oder Schneckenförderer oder nach Art eines Walzenvorschubs ausgebildet sind.

38. Vorrichtung nach Anspruch 27, **dadurch gekennzeichnet, daß** mehrere Mittel (12) zum Führen der Biomasse auf das Heizelement (22) hin angeordnet sind.

39. Vorrichtung nach Anspruch 27, **dadurch gekennzeichnet, daß** die Mittel (10) zum Fördern als Druckstempel, Kettenförderer (Obertrum) oder als Anpreßwalzen ausgebildet sind.

40. Vorrichtung nach Anspruch 27, mit einem Heizelement (22) und einem oder mehreren Mitteln (12) zum Führen der Biomasse, wobei die Querschnittsfläche der Mittel (12) zum Führen der Biomasse insgesamt zwischen 2% und 75%, besonders bevorzugt zwischen 5 und 60%, vorteilhaft zwischen 6 und 50% der beheizten Fläche des Heizelements (22) während der Pyrolyse abdecken.

41. Vorrichtung nach Anspruch 27, **dadurch gekennzeichnet, dass** Mittel (28) zum Auffangen der Pyrolyseprodukte vorgesehen sind.

42. Vorrichtung nach Anspruch 27, **dadurch gekennzeichnet, dass** als Mittel zum Auffangen der Pyrolyseprodukte ein Gehäuse (28) vorgesehen ist, das das Heizelement (22) und die Mittel (12) zum Führen der Biomasse dort, wo diese während der Pyrolyse aneinander anliegen, so umfasst, dass die Pyrolyseprodukte, insbesondere Feststoffe und Gase, vollständig aufgefangen werden.

43. Vorrichtung nach Anspruch 27, **dadurch gekennzeichnet, dass** die Mittel (28) zum Auffangen der Pyrolyseprodukte so ausgelegt sind, dass Feststoffe infolge von Gravitation oder mittels Zyklonen von den flüssigen oder gasförmigen Pyrolyseprodukten getrennt werden.

44. Vorrichtung nach Anspruch 27, **dadurch gekennzeichnet, dass** die Mittel (28) zum Auffangen der Pyrolyseprodukte Vorrichtungen zum Fraktionieren der gasförmigen Pyrolyseprodukte aufweisen.

45. Vorrichtung nach Anspruch 27, die **dadurch gekennzeichnet ist, dass** sie mit Mitteln zum Erzeugen von Energie ausgestattet ist, die derart ausgelegt sind, dass im Betriebszustand die Energie zum Beheizen des Heizelements (22) aus der Verbrennung von Pyrolyseprodukten, vorzugsweise Kohle, erzeugt wird,

## Claims

1. Method for the ablative pyrolysis of biomass, synthetic oligomers, synthetic polymers, rubber and/or plastics, comprising a heating element (22) and comprising a plurality of means (12) for guiding the biomass, the heating element (22) and the biomass being pressed against one another during the pyrolysis at a pressure of 5 bar up to 200 bar, and the cross-sectional area of the means (12) for guiding covering, in total, between 2% and 80% of the surface area of the heating element (22).

2. Method according to Claim 1, **characterised in that** the pressure is between 5 bar and 150 bar, preferably between 10 bar and 100 bar, particularly preferably between 10 bar and 80 bar, preferably between 20 bar and 60 bar.

3. Method according to Claim 1, **characterised in that** the heating element (22) is heated in the operating state to temperatures of between 300°C and 1000°C, preferably between 400°C and 800°C, particularly preferably between 500°C and 700°C, advantageously between 550°C and 600°C.

4. Method according to Claim 1, **characterised in that** the heating element (22) is a planar or curved plate, which is optionally made up of individual segments.

5. Method according to Claim 1, **characterised in that** the heating element (22) is configured as a profiled plate, preferably as a plate comprising grooves.

6. Method according to Claim 1, **characterised in that** a circular plate is used as a heating element (22), preferably with a diameter of approximately 20 to approximately 300 cm.

7. Method according to Claim 1, **characterised in that** the heating element (22) is produced from metal and/or ceramics.

8. Method according to Claim 1, **characterised in that** the residence time for primary pyrolysis products until further processing is set at a period of approximately 0.5 to approximately 10 seconds, preferably less than 5 seconds, particularly preferably less than 2 seconds.

9. Method according to Claim 1, **characterised in that** before the pyrolysis the biomass is comminuted to a particle size of approximately 0.5 mm to approximately 70 cm, preferably approximately 5 cm to approximately 50 cm, particularly preferably approximately 15 cm to approximately 30 cm.

10. Method according to Claim 1, **characterised in that** the heating element (22) is provided with a device for direct heating or with a device for indirect heating.

11. Method according to Claim 1, **characterised in that** - in addition to advancing towards the heating element (22) - the biomass performs a second movement, preferably a rotational movement relative to the fixed heating element (22).

12. Method according to Claim 1, **characterised in that** during the pyrolysis the biomass and the heating element (22) are moved relative to one another, the heating element (22) and the means (12) for feeding being arranged relative to one another at an angle of more than 10°, relative to the axis which is defined by the direction of advance of biomass towards the heating element (22).

13. Method according to Claim 1, **characterised in that** the heating element (22) rotates during the pyrolysis.

14. Method according to Claim 1, **characterised in that** the biomass is moved relative to the heating element (22) during the pyrolysis.

15. Method according to Claim 1, **characterised in that** the means (12) for guiding the biomass are configured as U-shaped profiles or as a box profile, in which the biomass is guided by means (10) for conveying.

16. Method according to Claim 1, **characterised in that** the means (12) for guiding are configured as an extruder or worm conveyor or in the manner of a roller feeder.

17. Method according to Claim 1, **characterised in that** a plurality of means (12) are arranged for guiding the biomass in the direction of a heating element.

18. Method according to Claim 1, **characterised in that** the means (12) for conveying are configured as pressure pistons, chain conveyors (upper run) or pressing rollers.

19. Method according to Claim 1, comprising a heating element (22) and one or more means (12) for guiding the biomass, the cross-sectional area of the means (12) for guiding the biomass during the pyrolysis covering, in total, between 2% and 75%, particularly preferably between 5 and 70%, advantageously between 6 and 50% of the surface area of the heating element (22).

20. Method according to Claim 1, **characterised in that** means (28) are provided for collecting the pyrolysis products.

21. Method according to Claim 1, **characterised in that** a housing (28) is provided as the means for collecting, said housing encompassing the heating element (22) and the means (12) for guiding the biomass at the point where said heating element and means for guiding bear against one another during the pyrolysis, such that the pyrolysis products, in particular solids and gases, are collected in full.

22. Method according to Claim 1, **characterised in that** the means (28) for collecting the pyrolysis products are designed so that solids are separated from the liquid or gaseous pyrolysis products as a result of gravity or by means of cyclones.

23. Method according to Claim 1, **characterised in that** the means (28) for collecting the pyrolysis products comprise devices for fractionating the gaseous pyrolysis products.

24. Method according to Claim 1, **characterised in that** the energy for heating the heating element (22) is produced from the combustion of pyrolysis products, preferably carbon.

25. Method according to Claim 1, **characterised in that** natural oligomers, natural polymers, lignocellulosic raw materials and mixtures of said materials, liquid manure, sludge, in particular sewage sludge, organic waste material, such as bones, hides, feathers, industrial waste timber and building timber are used as biomass.

26. Method according to Claim 1, the heat being supplied more rapidly than the heat being discharged in the material to be pyrolysed.

27. Device for the pyrolysis of biomass, synthetic oligomers, synthetic polymers, rubber and/or plastics, comprising a material feed (4) and a pyrolysis station (6), the material feed (4) comprising means for producing pressure of between 5 bar and 200 bar, which press the raw material to be pyrolysed against the pyrolysis station (6) and the pyrolysis station (6) comprising a heating element (22), which in the operating state is heated to a temperature of between 300°C and 1000°C, the cross-sectional area of the plurality of means (12) for guiding the biomass covering, in total, between 2% and 80% of the surface area of the heating element (22).

28. Device according to Claim 27, **characterised in that** a transmission means (18) is provided which sets the heating element (22) in rotation in the operating state.

29. Device according to Claim 27, **characterised in that** a heating device (24) is provided for the heating element (22), and which is designed either for direct heating or for indirect heating.

30. Device according to Claim 27, **characterised in that** the heating element (22) is produced from metal and/or ceramics.

31. Device according to Claim 27, **characterised in that** the heating element (22) is a planar or curved plate, which is optionally made up of individual segments.

32. Device according to Claim 27, **characterised in that** the heating element (22) is configured as a profiled plate, preferably as a plate comprising grooves.

33. Device according to Claim 27, **characterised in that** the heating element (22) is provided with a radially oriented profile.

34. Device according to Claim 27, **characterised in that** the heating element (22) and the means (12) for feeding are arranged relative to one another at an angle of more than 10°, relative to the axis which is defined by the direction of advance of the biomass towards the heating element (22).

35. Device according to Claim 27, **characterised in that** means for moving are provided, by which the means (12) for guiding are moved relative to the heating element (22) during the pyrolysis.

36. Device according to Claim 27, **characterised in that** the means (12) for guiding the biomass are configured as U-shaped profiles or as a box profile, in which the biomass is guided by means (10) for conveying.

37. Device according to Claim 27, **characterised in that** the means (12) for guiding are configured as an extruder or worm conveyor or in the manner of a roller feeder.

38. Device according to Claim 27, **characterised in that** a plurality of means (12) are arranged for guiding the biomass in the direction of the heating element (22).

39. Device according to Claim 27, **characterised in that** the means (10) for conveying are configured as pressure pistons, chain conveyors (upper run) or pressing rollers.

40. Device according to Claim 27, comprising a heating element (22) and one or more means (12) for guiding the biomass, the cross-sectional area of the means (12) for guiding the biomass during the pyrolysis covering, in total, between 2% and 75%, particularly preferably between 5 and 60%, advantageously between 6 and 50% of the heated surface area of the heating element (22).

41. Device according to Claim 27, **characterised in that** means (28) are provided for collecting the pyrolysis products.

42. Device according to Claim 27, **characterised in that** a housing (28) is provided as the means for collecting the pyrolysis products, said housing encompassing the heating element (22) and the means (12) for guiding the biomass at the point where said heating element and means for guiding bear against one another during the pyrolysis, such that the pyrolysis products, in particular solids and gases, are collected in full.

43. Device according to Claim 27, **characterised in that** the means (28) for collecting the pyrolysis products are designed so that solids are separated from the liquid or gaseous pyrolysis products as a result of gravity or by means of cyclones.

44. Device according to Claim 27, **characterised in that** the means (28) for collecting the pyrolysis products comprise devices for fractionating the gaseous pyrolysis products.

45. Device according to Claim 27, which is **characterised in that** said device is provided with means for producing energy which are designed so that, in the operating state, the energy for heating the heating element (22) is produced from the combustion of pyrolysis products, preferably carbon.

## Revendications

1. Procédé de pyrolyse ablative de biomasse, d'oligomères synthétiques, de polymères synthétiques, de caoutchouc et/ou de plastique, comprenant un élément chauffant (22) et comprenant plusieurs moyens (12) pour guider la biomasse, dans lequel l'élément chauffant (22) et la biomasse sont comprimés l'un contre l'autre pendant la pyrolyse avec une pression allant de 5 bars à 200 bars et dans lequel la surface transversale des moyens (12) de guidage recouvre au total entre 2 % et 80 % de la surface de l'élément chauffant (22).

2. Procédé selon la revendication 1, **caractérisé en ce que** la pression est comprise entre 5 bars et 150 bars, de préférence entre 10 bars et 100 bars, de manière particulièrement préférée entre 10 bars et 80 bars, de préférence entre 20 bars et 60 bars.

3. Procédé selon la revendication 1, **caractérisé en ce que** l'élément chauffant (22) est chauffé à l'état de fonctionnement à des températures comprises entre 300°C et 1000°C, de préférence entre 400°C et 800°C, de manière particulièrement préférée entre 500°C et 700°C, avantageusement entre 550°C et 600°C.

4. Procédé selon la revendication 1, **caractérisé en ce que** l'élément chauffant (22) est une plaque plane ou bombée qui est éventuellement composée de segments individuels.

5. Procédé selon la revendication 1, **caractérisé en ce que** l'élément chauffant (22) est réalisé en tant que plaque profilée, de préférence en tant que plaque comprenant des rainures.

6. Procédé selon la revendication 1, **caractérisé en ce qu'**une plaque circulaire, de préférence avec un diamètre d'environ 20 à environ 300 cm, est utilisée comme élément chauffant (22).

7. Procédé selon la revendication 1, **caractérisé en ce que** l'élément chauffant (22) est fabriqué en métal et/ou céramique.

8. Procédé selon la revendication 1, **caractérisé en ce que** la durée de séjour de produits de la pyrolyse primaires jusqu'au traitement ultérieur est réglée sur une durée d'environ 0,5 à environ 10 secondes, de préférence de moins de 5 secondes, de manière particulièrement préférée de moins de 2 secondes.

9. Procédé selon la revendication 1, **caractérisé en ce que** la biomasse est décomposée avant la pyrolyse à une taille de particules d'environ 0,5 mm à environ 70 cm, de préférence d'environ 5 cm à environ 50 cm, de manière particulièrement préférée d'environ 15 cm à environ 30 cm.

10. Procédé selon la revendication 1, **caractérisé en ce que** l'élément chauffant (22) est équipé d'un dispositif pour le chauffage direct ou d'un dispositif pour le chauffage indirect.

11. Procédé selon la revendication 1, **caractérisé en ce que** la biomasse réalise, outre l'avance contre l'élément chauffant (22), un second mouvement, de préférence un mouvement de rotation par rapport à l'élément chauffant fixe (22).

12. Procédé selon la revendication 1, **caractérisé en ce que** la biomasse et l'élément chauffant (22) sont déplacés l'un par rapport à l'autre pendant la pyrolyse, dans lequel l'élément chauffant (22) et les moyens (12) d'amenée sont disposés à un angle de plus de 10° l'un par rapport à l'autre, par rapport à l'axe qui est défini par la direction d'avance de la biomasse contre l'élément chauffant (22).

13. Procédé selon la revendication 1, **caractérisé en ce que** l'élément chauffant (22) tourne pendant la pyrolyse.

14. Procédé selon la revendication 1, **caractérisé en ce que** la biomasse est déplacée par rapport à l'élément chauffant (22) pendant la pyrolyse.

15. Procédé selon la revendication 1, **caractérisé en ce que** les moyens (12) pour guider la biomasse sont réalisés en tant que profilés en U ou en tant que profilé de caisse dans lesquels la biomasse est guidée avec des moyens (10) de transport.

16. Procédé selon la revendication 1, **caractérisé en ce que** les moyens (12) de guidage sont réalisés en tant qu'extrudeuse ou convoyeur à vis ou à la manière d'un appareil d'alimentation à avance par rouleaux.

17. Procédé selon la revendication 1, **caractérisé en ce que** plusieurs moyens (12) pour guider la biomasse sont disposés vers un élément chauffant.

18. Procédé selon la revendication 1, **caractérisé en ce que** les moyens (12) de transport sont réalisés en tant que poinçon, convoyeur à chaîne (brin supérieur) ou en tant que rouleaux de pression.

19. Procédé selon la revendication 1, comprenant un élément chauffant (22) et un ou plusieurs moyens (12) pour guider la biomasse, dans lequel la surface transversale des moyens (12) pour guider la biomasse recouvre au total entre 2 % et 75 %, de manière particulièrement préférée entre 5 et 70 %, avantageusement entre 6 et 50 % de la surface de l'élément chauffant (22) pendant la pyrolyse.

20. Procédé selon la revendication 1, **caractérisé en ce que** des moyens (28) pour collecter les produits de la pyrolyse sont prévus.

21. Procédé selon la revendication 1, **caractérisé en ce qu'**un logement (28) est prévu en tant que moyen de collecte, lequel comprend l'élément chauffant (22) et les moyens (12) pour guider la biomasse là où ceux-ci reposent l'un contre l'autre pendant la pyrolyse, de sorte que les produits de la pyrolyse, notamment les solides et les gaz, sont entièrement collectés.

22. Procédé selon la revendication 1, **caractérisé en ce que** les moyens (28) pour collecter les produits de la pyrolyse sont conçus de sorte que des solides sont séparés des produits de la pyrolyse liquides ou gazeux suite à la gravitation ou au moyen de cyclones.

23. Procédé selon la revendication 1, **caractérisé en ce que** les moyens (28) pour collecter les produits de la pyrolyse présentent des dispositifs pour fractionner les produits de la pyrolyse gazeux.

24. Procédé selon la revendication 1, **caractérisé en ce que** l'énergie pour chauffer l'élément chauffant (22) est générée à partir de la combustion des produits de la pyrolyse, de préférence de charbon.

25. Procédé selon la revendication 1, **caractérisé en ce que** des oligomères naturels, des polymères naturels, des matières brutes lignocellulosiques et des mélanges de ces substances, du lisier, de la boue, notamment des boues de curage, des matières résiduelles organiques telles que des os, des peaux, des plumes, du bois résiduel industriel et du bois de construction sont utilisés en tant que biomasse.

26. Procédé selon la revendication 1, dans lequel l'alimentation de la chaleur s'effectue en l'occurrence plus rapidement que la chaleur est évacuée dans la matière à pyrolyser.

27. Dispositif pour la pyrolyse de biomasse, d'oligomères synthétiques, de polymères synthétiques, de caoutchouc et/ou de plastique, comprenant une alimentation en matière (4) et une station de pyrolyse (6), dans lequel l'alimentation en matière (4) présente des moyens pour générer une pression comprise entre 5 bars et 200 bars qui compriment la matière brute à pyrolyser au niveau de la station de pyrolyse (6), et dans lequel la station de pyrolyse (6) présente un élément chauffant (22) qui est chauffé à l'état de fonctionnement à une température comprise entre 300°C et 1000°C, dans lequel la surface transversale des moyens (12) pour guider la biomasse recouvre au total entre 2 % et 80 % de la surface de l'élément chauffant (22).

28. Dispositif selon la revendication 27, **caractérisé en ce qu'**un engrenage (18) qui met l'élément chauffant (22) en rotation à l'état de fonctionnement est prévu.

29. Dispositif selon la revendication 27, **caractérisé en ce qu'**un dispositif de chauffage (24) pour l'élément chauffant (22) qui est conçu pour le chauffage direct ou indirect est prévu.

30. Dispositif selon la revendication 27, **caractérisé en ce que** l'élément chauffant (22) est fabriqué en métal et/ou céramique.

31. Dispositif selon la revendication 27, **caractérisé en ce que** l'élément chauffant (22) est une plaque plane ou bombée qui est éventuellement composée de segments individuels.

32. Dispositif selon la revendication 27, **caractérisé en ce que** l'élément chauffant (22) est réalisé en tant que plaque profilée, de préférence en tant que plaque comprenant des rainures.

33. Dispositif selon la revendication 27, **caractérisé en ce que** l'élément chauffant (22) est équipé d'un profilé orienté radialement.

34. Dispositif selon la revendication 27, **caractérisé en ce que** l'élément chauffant (22) et les moyens (12) d'amenée sont disposés à un angle de plus de 10° l'un par rapport à l'autre, par rapport à l'axe qui est défini par la direction d'avance de la biomasse contre l'élément chauffant (22).

35. Dispositif selon la revendication 27, **caractérisé en ce que** des moyens de déplacement, par lesquels les moyens (12) de guidage sont déplacés par rapport à l'élément chauffant (22) pendant la pyrolyse, sont prévus.

36. Dispositif selon la revendication 27, **caractérisé en ce que** les moyens (12) pour guider la biomasse sont réalisés en tant que profilés en U ou en tant que profilé de caisse dans lesquels la biomasse est guidée avec des moyens (10) de transport.

37. Dispositif selon la revendication 27, **caractérisé en ce que** les moyens (12) de guidage sont réalisés en tant qu'extrudeuse ou convoyeur à vis ou à la manière d'un appareil d'alimentation à avance par rouleaux.

38. Dispositif selon la revendication 27, **caractérisé en ce que** plusieurs moyens (12) pour guider la biomasse sont disposés vers l'élément chauffant (22).

39. Dispositif selon la revendication 27, **caractérisé en ce que** les moyens (10) de transport sont réalisés en tant que poinçon, convoyeur à chaîne (brin supérieur) ou en tant que rouleaux de pression.

40. Dispositif selon la revendication 27, comprenant un élément chauffant (22) et un ou plusieurs moyens (12) pour guider la biomasse, dans lequel la surface transversale des moyens (12) pour guider la biomasse recouvre au total entre 2 % et 75 %, de manière particulièrement préférée entre 5 et 60 %, avantageusement entre 6 et 50 % de la surface chauffée de l'élément chauffant (22) pendant la pyrolyse.

41. Dispositif selon la revendication 27, **caractérisé en ce que** des moyens (28) pour collecter les produits de la pyrolyse sont prévus.

42. Dispositif selon la revendication 27, **caractérisé en ce qu'**un logement (28) est prévu en tant que moyen pour collecter les produits de la pyrolyse, lequel comprend l'élément chauffant (22) et les moyens (12) pour guider la biomasse là où ceux-ci reposent l'un contre l'autre pendant la pyrolyse, de sorte que les produits de la pyrolyse, notamment les solides et les gaz, sont entièrement collectés.

43. Dispositif selon la revendication 27, **caractérisé en ce que** les moyens (28) pour collecter les produits de la pyrolyse sont conçus de sorte que des solides sont séparés des produits de la pyrolyse liquides ou gazeux suite à la gravitation ou au moyen de cyclones.

44. Dispositif selon la revendication 27, **caractérisé en ce que** les moyens (28) pour collecter les produits de la pyrolyse présentent des dispositifs pour fractionner les produits de la pyrolyse gazeux.

45. Dispositif selon la revendication 27, qui est **caractérisé en ce qu'**il est équipé de moyens pour générer de l'énergie qui sont conçus de telle sorte que l'énergie pour chauffer l'élément chauffant (22) est générée à partir de la combustion des produits de la pyrolyse, de préférence de charbon, à l'état de fonctionnement.
